# EUROPÄISCHE PATENTSCHRIFT

(11) **EP 3 322 829 B1**
(45) Veröffentlichungstag und Bekanntmachung des Hinweises auf die Patenterteilung: **21.08.2019**
(21) Anmeldenummer: 16738101.1
(22) Anmeldetag: 06.07.2016
(51) Int. Cl.: C22C 21/00, C22C 32/00, F16C 17/00, F16C 33/00

(54) **GLEITLAGER, GLEITLAGERWERKSTOFF, VERFAHREN ZUR HERSTELLUNG EINES GLEITLAGERWERKSTOFFES UND VERWENDUNG EINES GLEITLAGERWERKSTOFFES FÜR EIN GLEITLAGER**
SLIDING BEARING, SLIDING BEARING MATERIAL, PROCESS FOR THE PRODUCTION OF A SLIDING MATERIAL AND USE OF SLIDING BEARING MATERIAL AS A SLIDING BEARING
PALIER LISSE, MATÉRIAU DE PALIER LISSE, PROCÉDÉ DE FABRICATION D'UN MATÉRIAU DE PALIER LISSE, ET UTILISATION D'UN MATÉRIAU DE PALIER LISSE POUR UN PALIER LISSE

(30) Priorität: 13.07.2015 DE 102015213052
(43) Veröffentlichungstag der Anmeldung: 23.05.2018
(73) Patentinhaber: Federal-Mogul Wiesbaden GmbH, 65201 Wiesbaden (DE)
(72) Erfinder: SCHMITT, Holger, 64319 Pfungstadt (DE); MEISTER, Daniel, 55131 Mainz (DE)
(74) Vertreter: Hoffmann Eitle
(86) Internationale Anmeldenummer: PCT/EP2016/065963
(87) Internationale Veröffentlichungsnummer: WO 2017/009132

(56) Entgegenhaltungen:
- DE-A1-102011 004 133
- US-A1- 2002 192 105
- US-A1- 2003 207 769

## Beschreibung

### Technisches Gebiet

Die vorliegende Erfindung betrifft ein Gleitlager oder einen Teil davon, einen Gleitlagerwerkstoff, ein Verfahren zur Herstellung desselben sowie die Verwendung eines Gleitlagerwerkstoffs für ein Gleitlager. Ein erfindungsgemäßes Gleitlager zeichnet sich durch hohe Wärmeleitfähigkeit, gute mechanische Eigenschaften, verbesserte Gleiteigenschaften sowie gute Verarbeitbarkeit aus.

### Stand der Technik

Aus dem Stand der Technik ist die Nutzung von Aluminiumlegierungen als Gleitlagerwerkstoff bekannt.

So offenbart die EP 1 943 039 B1 die Verwendung einer Al-Fe-Legierung zur Herstellung von Gleitelementen, wobei der Legierung optional unter anderen bis zu 10 Gew.-% keramische Zusätze in Form von Platelets, Fasern und Partikeln zugegeben werden können. Zur Herstellung des Gleitelementes wird die Legierung zunächst geschmolzen und anschließend in eine Gussform gegossen.

Zudem beschreibt die DE 10 2011 004 133 A1 ein Verfahren zur Herstellung eines Gleitlagers, bei dem eine Aluminium-Eisen-Silizium-Legierung auf einen Stahlrücken aufgewalzt wird und ein Gleitlager mit einer Gleitfläche aus einer Aluminium-Eisen-Silizium-Legierung. US 2002/192105 A1 offenbart eine Al-Legierung, die zur Herstellung von Gleitlager vorgesehen ist. Die Legierung enthält 2-20% Sn, 3% oder weniger Cu sowie 0.3-5 Vol.% TiC Partikel.

### Darstellung der Erfindung

Der Erfindung liegt die Aufgabe zugrunde, ein Gleitlager zur Verfügung zu stellen, das eine möglichst einfache chemische Zusammensetzung und Herstellbarkeit bei gleichzeitig verbesserten Gleiteigenschaften und mechanischen Eigenschaften aufweist.

Die Lösung dieser Aufgabe erfolgt durch das in Anspruch 6 beschriebene Gleitlager, den im Anspruch 1 beschriebenen Gleitlagerwerkstoff, das Verfahren zur Herstellung des Gleitlagerwerkstoffs nach Anspruch 7 und die Verwendung eines Gleitlagerwerkstoffs für ein Gleitlager nach Anspruch 5.

Die Kombination eines Stahlsubstratrückens mit einer darauf aufgebrachten Aluminiumlegierung, die neben der Aluminiumlegierungsmatrix Hartpartikel und/oder Fasern enthält, führt dabei zu vorteilhaften mechanischen Eigenschaften des Gleitlagers. Zudem erlaubt die Nutzung eines Stahlsubstratrückens die günstigen Eigenschaften der Aluminiumlegierung an denjenigen Positionen des Gleitlagers zu nutzen, an denen diese benötigt werden, während weniger kritische Stellen aus kostengünstigerem Material gefertigt werden können. Die Aluminiumlegierung weist aufgrund der eingefügten Fasern und/oder Hartpartikel eine verbesserte Steifigkeit und Festigkeit auf. Gleichzeitig ermöglicht die Aluminiumlegierungsmatrix eine hohe Wärmeleitfähigkeit, die auf dem Niveau des reinen Aluminiums liegt und eine bessere Wärmeabfuhr unter Mischreibungsbedingungen bewirkt. Die Legierung enthält 0,01 bis 50 Vol.-% und/oder 0,01 bis 54 Gew.-%, bevorzugt > 10 bis 50 Gew.-%, Fasern und 0,01 bis 10 Gew.-% Hartpartikel, um einen ausreichend Einfluss der Fasern und/oder Hartpartikel auf die mechanischen Eigenschaften zu gewährleisten.

Bevorzugte Weiterbildungen sind in den weiteren Ansprüchen beschrieben.

Bevorzugt wird die Zugabe von Schmiermitteln zur Aluminiumlegierung, beispielsweise h-BN und/oder Graphit, besonders bevorzugt in einer Konzentration von 0,01 bis 10 Gew.-%, zur Verbesserung der Gleiteigenschaften.

Die Aluminiumlegierungsmatrix enthält zusätzlich jeweils bis zu 3 Gew.-% Cu, Mn, Mg, Si, Fe, V, Ti, Sc, Cr, Zn und/oder Ni, da hierdurch die Matrix weiter verstärkt wird. Ferner können als Feststoffschmiermittel mit Vorteil bis zu 15 Gew.-% Sn hinzugegeben werden, bei höheren Zinngehalten wird allerdings die verstärkende Wirkung der Fasern und Hartpartikel herabgesetzt. Zudem können der Aluminiumlegierungsmatrix mit Vorteil bis zu 0,2 Gew.-%, bevorzugt 0,02 bis 0,05 Gew.-%, Sr, Bor, TiB₂ und/oder Na zur Beeinflussung des Ausscheidungsverhaltens und der Veredelung der Legierung hinzugegeben werden. Insbesondere können hierdurch die Form und Größe der Ausscheidungen vorteilhaft eingestellt werden. Die genannten Legierungselemente zeichnen sich durch sehr gute Verfügbarkeit und einen niedrigen Preis aus. Die moderate Härte der Legierungsmatrix sorgt zudem für eine gute Einbettfähigkeit der Hartpartikel.

Die Hartpartikel werden aus der Gruppe der Karbide, Nitride, Boride und/oder Oxide ausgewählt, beispielsweise B₄C, TaC, ZrC, HfC, Cr₂C WC, TaN, ZrN, HfN, TiN, TaB, ZrB₂, HfB, CrB₂, MoB, WB, HfO₂, CrO₂ und/oder MgO. Bevorzugt bestehen die Hartpartikel aus TiC, MoC, AlN, c-BN, TiB₂ und/oder Y₂O₃, besonders bevorzugt aus SiC, Si₃N₄, ZrO₂ und/oder Al₂O₃. Mit Vorteil weisen die Hartpartikel eine Größe von < 20µm auf, da hierdurch eine ausreichende Festigkeitssteigerung erzielt wird.

Die Fasern für die Aluminiumlegierung sind aus der Gruppe der organischen und/oder anorganischen Fasern ausgewählt, insbesondere Wolframfasern, Zirkonoxidfasern, Borfasern und Stahlfasern. Bevorzugt sind hierbei Glasfasern und/oder keramische Fasern, besonders bevorzugt SiC-Fasern, Kohlefasern und/oder Al₂O₃-Fasern. Weiterhin weisen die Fasern mit Vorteil eine Länge von < 50µm und einen Durchmesser von < 3µm auf, besonders bevorzugt liegen die Fasern in Form von Nanoröhren, auch Nanotubes genannt, beispielsweise Kohlenstoff-Nanotubes, vor. Die genannten Fasern der spezifizierten Dimensionen erhöhen vorteilhaft die Festigkeit der Aluminiumlegierung.

Ferner ist in einer bevorzugten Ausführungsform der Erfindung vorgesehen, dass die Fasern in Längsrichtung eine höhere Zugfestigkeit und/oder ein höheres Elastizitätsmodul und/oder eine niedrigere Bruchdehnung als die Aluminiumlegierungsmatrix aufweisen. Eine derartige Kombination von Aluminiumlegierungsmatrix und Fasern führt zu ausgezeichneten mechanischen Eigenschaften des Gesamtwerkstoffes.

Mit Vorteil besteht der Stahlsubstratrücken aus einem der Stähle C06, C10, C22 oder CXX (wobei XX > 22). Die genannten Stähle zeichnen sich durch gute Verfügbarkeit aus und lassen sich besonders gut mit der Aluminiumlegierung zu einem Gleitlagerwerkstoff verbinden. Alternativ kann der Stahlsubstratrücken auch aus einem beliebigen anderen Stahl bestehen.

Zudem ist gemäß einer weiteren Ausführungsform vorgesehen, zwischen dem Stahlsubstratrücken und der Aluminiumlegierung eine Zwischenschicht, bevorzugt bestehend aus einer Aluminiumlegierung des 1xxx, 2xxx oder 3xxx Legierungssystems, einzubringen. Die Zwischenschicht verbessert mit Vorteil die Bindung zwischen Stahlsubstratrücken und Aluminiumlegierung.

Vorzugsweise wird der Gleitlagerwerkstoff gemäß einer der vorangegangenen Ausführungsformen zur Herstellung eines Gleitlagers oder eines Teils davon verwendet. Hierdurch kann ein Gleitlager zur Verfügung gestellt werden, das eine möglichst einfache chemische Zusammensetzung und Herstellbarkeit bei gleichzeitig verbesserten Gleiteigenschaften und mechanischen Eigenschaften aufweist.

Bevorzugt wird der Gleitlagerwerkstoff gemäß einer der genannten Ausführungsformen durch Heißwalzplattieren oder Kaltwalzplattieren der Aluminiumlegierung auf den Stahlsubstratrücken hergestellt. Dadurch kann unter kosten-und zeiteffizienten Bedingungen eine hervorragende Bindung zwischen der Aluminiumlegierung und dem Stahlsubstratrücken gewährleistet werden. Durch das Heißwalzplattieren können aufgrund der damit einhergehenden dynamischen Rekristallisation höhere Umformgrade und damit eine verbesserte Bindung zwischen Stahlsubstrat und Aluminiumlegierung erreicht werden.

Mit Vorteil ist ferner vorgesehen, dass vor dem Walzplattieren der Aluminiumlegierung zunächst eine Aluminiumfolie, bestehend aus einer Aluminiumlegierung des lxxx, 2xxx oder 3xxx Legierungssystems, auf den Stahlsubstratrücken aufgebracht, bevorzugt walzplattiert wird. Ferner kann die Aluminiumfolie auch in einem Walzschritt gemeinsam mit der Aluminiumlegierung auf den Stahlsubstratrücken walzplattiert werden. Durch das Aufbringen der Aluminiumfolie kann insbesondere beim Kaltwalzplattieren die Bindung zwischen der Aluminiumlegierung und dem Stahlsubstrat verbessert werden.

Besonders bevorzugt ist das Durchführen einer Homogenisierungs- und/oder Rekristallisationsglühung im Temperaturbereich von 200°C - 600°C bei einer Haltezeit von 1-30h vor dem Walzplattieren. Hierdurch kann eine homogene Verteilung der Legierungselemente sichergestellt werden. Mittels Rekristallisationsglühung lassen sich zudem durch die einhergehende Endfestigung hohe Umformgrade erreichen.

Ferner umfasst das Verfahren zur Herstellung eines Gleitlagerwerkstoffes mit Vorteil die folgenden Verfahrensschritte:
- Überführen der Legierungselemente, Partikel und/oder Fasern der Aluminiumlegierung in ein Schmelzbad,
- Stranggießen der Schmelze zu einem Strang mit im Wesentlichen rechteckigem Querschnitt,
- Wärmebehandlung des Strangs,
- Walzen des Strangs
- Wärmebehandlung des gewalzten Strangs und
- Walzplattieren der Aluminiumlegierung auf einen Stahlsubstratrücken.

Durch das Überführen der Legierungselemente, Partikel und/oder Fasern der Aluminiumlegierung in ein Schmelzbad kann eine ausreichend feine und homogene Verteilung der Komponenten in der Aluminiumlegierung sichergestellt werden. Der Strangguss, bevorzugt kontinuierlich, im rechteckigen Querschnitt erleichtert mit Vorteil die nachfolgenden Walz-und/oder Walzplattierschritte. Mittels Wärmebehandlung kann sowohl das Gefüge vorteilhaft eingestellt werden, als auch die notwendige Endfestigung für die Verformung erreicht werden. Durch das Walzplattieren wird unter kosten- und zeiteffizienten Bedingungen ein dauerhafter Verbund zwischen Stahlsubstrat und Aluminiumlegierung erzeugt.

Sämtliche vorangehend und nachfolgend im Zusammenhang mit dem Gleitlagerwerkstoff erwähnten Merkmale können auch bei dem erfindungsgemäßen Verfahren, der neuartigen Verwendung und dem Gleitlager Anwendung finden und umgekehrt.

### Bevorzugte Ausführungsform

Gemäß einer bevorzugten Ausführungsform werden die Legierungselemente der Aluminiumlegierungsmatrix, namentlich etwa 0,05 Gew.-% Sr, etwa 14,0 Gew.-% Sn, etwa 1,0 Gew.-% Kupfer sowie als Rest Aluminium und nicht zu vermeidende Verunreinigungen, sowie etwa 5 Gew.-% SiC-Hartpartikel und etwa 20 Vol.-% Al₂O₃-Fasern bei einer Temperatur von 800°C in ein Schmelzbad überführt. Die Gewichtsangaben der Legierungselemente beziehen sich hierbei auf die Aluminiumlegierungsmatrix. Der spezifizierte Volumenanteil an Fasern kann über die bekannte Dichte der Fasern in einen korrespondierenden Gewichtsanteil umgerechnet werden. Die Hartpartikel und Fasern bleiben bei der genannten Schmelztemperatur in fester Phase, durch Konvektion wird eine feine und homogene Verteilung der Hartpartikel und Fasern in der Schmelze erreicht. Anschließend wird die Aluminiumlegierung mittels Strangguss zu einem Strang mit rechteckigem Querschnitt vergossen. Durch eine Homogenisierungsglühung bei etwa 450°C und 16 h Haltezeit wird die Aluminiumlegierungsmatrix homogenisiert, so dass der Strang bei den nachfolgenden Walzschritten aufgrund der verringerten Festigkeit auf eine Dicke von 1,1 mm abgewalzt werden kann. Anschließend wird die Aluminiumlegierung mittels Heißwalzplattieren auf einen C06-Stahl aufgebracht. Durch die dynamische Rekristallisation beim Heißwalzplattieren können hohe Umformgrade und damit eine hervorragende Bindung zwischen dem Stahlsubstrat und der Aluminiumlegierung erreicht werden. Zur Verbesserung der Haftung zwischen Substrat und Aluminiumlegierung werden die Oberflächen vor dem Heißwalzplattieren jeweils geschliffen und gebürstet. Durch übliche Umformschritte und Nachbearbeitung der Oberflächen wird aus dem Gleitlagerwerkstoff schließlich eine Lagerschale gefertigt.

## Patentansprüche

1. Gleitlagerwerkstoff, aufweisend einen Stahlsubstratrücken und eine darauf aufgebrachte Aluminiumlegierung, **dadurch gekennzeichnet, dass**
die Aluminiumlegierung eine Aluminiumlegierungsmatrix sowie Hartpartikel, 0,01 bis 10 Gew.-%, und Fasern, 0,01 bis 50 Vol.-% und/oder 0,01 bis 54 Gew.-%, enthält und der Stahlsubstratrücken aus einem der Stähle C06, C10, C22 oder CXX (wobei XX > 22) besteht, wobei
die Aluminiumlegierungsmatrix bleifrei ist und/oder eines oder mehrere der folgenden Legierungselemente aufweist:
jeweils bis zu 3 Gew.-% Cu, Mn, Mg, Si, Fe, V, Ti, Sc, Cr, Zn und/oder Ni
bis zu 15 Gew.-% Sn
bis zu 0,2 Gew.-%, bevorzugt 0,02 bis 0,05 Gew.-% Sr, Bor, TiB₂ und/oder Na
sowie als Rest Aluminium und bis zu 0,5 Gew.-% nicht zu vermeidende Verunreinigungen,
die Hartpartikel aus der Gruppe der Karbide, Nitride, Boride und/oder Oxide ausgewählt sind, bevorzugt aus der Gruppe TiC, MoC, AlN, c-BN, TiB₂ und/oder Y₂O₃, besonders bevorzugt aus der Gruppe SiC, Si₃N₄, ZrO₂ und/oder Al₂O₃, und die Hartpartikel bevorzugt eine Größe von < 20µm aufweisen und
die Fasern aus der Gruppe der organischen und/oder anorganischen Fasern ausgewählt sind, bevorzugt Glasfasern und/oder keramische Fasern, besonders bevorzugt SiC-Fasern, Kohlefasern und/oder Al₂O₃-Fasern, und die Fasern bevorzugt eine Länge von < 50µm und einen Durchmesser von < 3µm aufweisen, besonders bevorzugt in Form von Nanotubes.

2. Gleitlagerwerkstoff gemäß Anspruch 1, **dadurch gekennzeichnet, dass**
die Aluminiumlegierung Schmiermittel, bevorzugt h-BN und/oder Graphit, besonders bevorzugt in einer Konzentration von 0,01 bis 10 Gew.-%, enthält.

3. Gleitlagerwerkstoff gemäß einem der vorangegangenen Ansprüche, **dadurch gekennzeichnet, dass**
die Fasern in Längsrichtung eine höhere Zugfestigkeit und/oder ein höheres Elastizitätsmodul und/oder eine niedrigere Bruchdehnung als die Aluminiumlegierungsmatrix aufweisen.

4. Gleitlagerwerkstoff gemäß einem der vorangegangenen Ansprüche, **dadurch gekennzeichnet, dass**
zwischen dem Stahlsubstratrücken und der Aluminiumlegierung eine Zwischenschicht, bevorzugt bestehend aus einer Aluminiumlegierung des lxxx, 2xxx oder 3xxx Legierungssystems, vorgesehen ist.

5. Verwendung eines Gleitlagerwerkstoffes gemäß einem der vorangegangenen Ansprüche für ein Gleitlager oder einen Teil davon.

6. Gleitlager, **dadurch gekennzeichnet, dass**
es zumindest teilweise aus einem Gleitlagerwerkstoff gemäß einem der Ansprüche 1 bis 4 besteht.

7. Verfahren zur Herstellung eines Gleitlagerwerkstoffes gemäß einem der Ansprüche 1 bis 4, **dadurch gekennzeichnet, dass**
die Aluminiumlegierung durch Heißwalzplattieren oder Kaltwalzplattieren auf den Stahlsubstratrücken aufgebracht wird.

8. Verfahren zur Herstellung eines Gleitlagerwerkstoffes gemäß Anspruch 7, **dadurch gekennzeichnet, dass**
vor dem Walzplattieren der Aluminiumlegierung zunächst eine Aluminiumfolie, bestehend aus einer Aluminiumlegierung des lxxx, 2xxx oder 3xxx Legierungssystems, auf den Stahlsubstratrücken aufgebracht, bevorzugt walzplattiert wird.

9. Verfahren zur Herstellung eines Gleitlagerwerkstoffes gemäß einem der Ansprüche 7 oder 8, **dadurch gekennzeichnet, dass**
die Aluminiumlegierung vor dem Walzplattieren zumindest einer Homogenisierungs- und/oder Rekristallisationsglühung im Temperaturbereich von 200°C - 600°C bei einer Haltezeit von 1-30h unterzogen wird.

10. Verfahren zur Herstellung eines Gleitlagerwerkstoffes gemäß einem der Ansprüche 7 bis 9, umfassend die Verfahrensschritte:
Überführen der Legierungselemente, Hartpartikel und/oder Fasern der Aluminiumlegierung in ein Schmelzbad,
Stranggießen der Schmelze zu einem Strang mit im Wesentlichen rechteckigem Querschnitt,
Wärmebehandlung des Strangs,
Walzen des Strangs
Wärmebehandlung des gewalzten Strangs und
Walzplattieren der Aluminiumlegierung auf einen Stahlsubstratrücken.

## Claims

1. Sliding bearing material, having a steel backing substrate and an aluminium alloy applied thereto,
**characterised in that**
the aluminium alloy contains an aluminium alloy matrix plus 0.01 to 10 wt.% of hard particles, and 0.01 to 50 vol.% and/or 0.01 to 54 wt.% of fibres, and the steel backing substrate comprises one of the steels C06, C10, C22 or CXX (where XX > 22),
the aluminium alloy matrix being free of lead and/or having one or more of the following alloying elements:
up to 3 wt.% respectively of Cu, Mn, Mg, Si, Fe, V, Ti, Sc, Cr, Zn and/or Ni,
up to 15 wt.% of Sn,
up to 0.2 wt.%, and preferably 0.02 to 0.05 wt.%, of Sr, boron, TiB₂ and/or Na,
and the remainder aluminium and up to 0.5 wt.% of unavoidable impurities,
the hard particles being selected from the group comprising carbides, nitrides, borides and/or oxides, and preferably from the group comprising TiC, MoC, AlN, c-BN, TiB₂ and/or Y₂O₃, and as a particular preference from the group comprising SiC, Si₃N₄, ZrO₂ and/or Al₂O₃, and the hard particles preferably being of a size < 20µm and
the fibres being selected from the group comprising organic and/or inorganic fibres, and preferably glass fibres and/or ceramic fibres, and as a particular preference SiC fibres, carbon fibres and/or Al₂O₃ fibres, and the fibres preferably being of a length < 50µm and a diameter < 3µm, and as a particularly preference being in the form of nanotubes.

2. Sliding bearing material according to claim 1, **characterised in that** the aluminium alloy contains lubricants, and preferably h-BN and/or graphite, in, as a particular preference, a concentration of 0.01 to 10 wt.%.

3. Sliding bearing material according to either of the preceding claims, **characterised in that** the fibres have, in the longitudinal direction, a higher tensile strength and/or a higher modulus of elasticity and/or a lower elongation at break, than the aluminium alloy matrix.

4. Sliding bearing material according to one of the preceding claims, **characterised in that** an intermediate layer, preferably comprising an aluminium alloy of the lxxx, 2xxx or 3xxx alloy series, is provided between the steel backing substrate and the aluminium alloy.

5. Use of a sliding bearing material according to one of the preceding claims for a sliding bearing or a part thereof.

6. Sliding bearing, **characterised in that** it at least partly comprises a sliding bearing material according to one of claims 1 to 4.

7. Method of producing a sliding bearing material according to one of claims 1 to 4, **characterised in that** the aluminium alloy is applied to the steel backing substrate by hot roll bonding or cold roll bonding.

8. Method of producing a sliding bearing material, according to claim 7, **characterised in that**, before the roll bonding of the aluminium alloy, an aluminium foil comprising an aluminium alloy of the lxxx, 2xxx or 3xxx alloy series is first applied, and is preferably roll bonded, to the steel backing substrate.

9. Method of producing a sliding bearing material according to either of claims 7 and 8, **characterised in that**, before the roll bonding, the aluminium alloy is subjected at least to homogenising and/or recrystallisation annealing in the temperature range of 200°C - 600°C for a holding time of 1-30 h.

10. Method of producing a sliding bearing material according to one of claims 7 to 9, comprising the following method steps:
conversion of the alloying elements, hard particles and/or fibres of the aluminium alloy into a melt bath,
continuous casting of the melt into a strand of substantially rectangular cross-section,
heat treatment of the strand,
rolling of the strand,
heat treatment of the rolled strand and
roll bonding of the aluminium alloy onto a steel backing substrate.

## Revendications

1. Matériau pour palier lisse, présentant une partie arrière de substrat en acier et un alliage d'aluminium appliqué sur celle-ci, **caractérisé en ce que**
l'alliage d'aluminium contient une matrice d'alliage d'aluminium ainsi que des particules dures, 0,01 à 10 % en poids, et des fibres, 0,01 à 50 % en volume et/ou 0,01 à 54 % en poids, et la partie arrière de substrat en acier est constituée d'un des aciers C06, C10, C22 ou CXX (dans lequel XX > 22), dans lequel
la matrice d'alliage d'aluminium est sans plomb, et/ou un ou plusieurs des éléments d'alliage suivants présentent :
respectivement jusqu'à 3 % en poids de Cu, Mn, Mg, Si, Fe, V, Ti, Sc, Cr, Zn et/ou Ni,
jusqu'à 15 % en poids de Sn,
jusqu'à 0,2 % en poids, de manière préférée 0,02 à 0,05 % en poids de Sr, Bor, TiB₂ et/ou Na,
ainsi que le reste sous forme d'aluminium et jusqu'à 0,5 % en poids d'impuretés inévitables,
les particules dures sont sélectionnées à partir du groupe des carbures, des nitrures, des borures et/ou des oxydes, de manière plus préférée parmi le groupe de TiC, MoC, AlN, c-BN, TiB₂ et/ou Y₂O₃, le plus préférentiellement parmi le groupe de SiC, Si₃N₄, ZrO₂ et/ou Al₂O₃, et les particules dures présentent de manière plus préférée une taille < 20 µm, et
les fibres sont sélectionnées à partir du groupe des fibres organiques et/ou inorganiques, de manière plus préférée parmi les fibres de verre et/ou les fibres en céramique, le plus préférentiellement les fibres de SiC, les fibres de carbone et/ou des fibres de Al₂O₃ et les fibres présentent de manière plus préférée une longueur < 50 µm et un diamètre < 3 µm, le plus préférentiellement sous la forme de nanotubes.

2. Matériau pour palier lisse selon la revendication 1, **caractérisé en ce que**
l'alliage d'aluminium contient des agents lubrifiants, de manière préférée du h-BN et/ou du graphite, le plus préférentiellement en une concentration allant de 0,01 à 10 % en poids.

3. Matériau pour palier lisse selon l'une quelconque des revendications précédentes, **caractérisé en ce que**
les fibres présentent dans le sens longitudinal une résistance à la traction plus élevée et/ou un module d'élasticité plus élevé et/ou un allongement à la rupture inférieur par rapport à la matrice d'alliage d'aluminium.

4. Matériau pour palier lisse selon l'une quelconque des revendications précédentes, **caractérisé en ce que**
une couche intermédiaire, de manière plus préférée constituée d'un alliage d'aluminium du 1xxx, 2xxx ou 3xxx système d'alliage, est prévue entre la partie arrière de substrat en acier et l'alliage d'aluminium.

5. Utilisation d'un matériau pour palier lisse selon l'une quelconque des revendications précédentes pour un palier lisse ou une partie de celui-ci.

6. Palier lisse, **caractérisé en ce que**
il est constitué au moins en partie d'un matériau pour palier lisse selon l'une quelconque des revendications 1 à 4.

7. Procédé servant à fabriquer un matériau pour palier lisse selon l'une quelconque des revendications 1 à 4, **caractérisé en ce que**
l'alliage d'aluminium est appliqué par placage-laminage à chaud ou par placage-laminage à froid sur la partie arrière de substrat en acier.

8. Procédé servant à fabriquer un matériau pour palier lisse selon la revendication 7, **caractérisé en ce que**
avant le placage-laminage de l'alliage d'aluminium, un film d'aluminium, constitué d'un alliage d'aluminium du 1xxx, 2xxx ou 3xxx système d'alliage, est appliqué, de manière plus préférée par placage-laminage, sur la partie arrière de substrat en acier.

9. Procédé servant à fabriquer un matériau pour palier lisse selon l'une quelconque des revendications 7 ou 8, **caractérisé en ce que**
l'alliage d'aluminium est soumis avant le placage-laminage au moins à un recuit d'homogénéisation et/ou de recristallisation dans la plage de températures de 200°C à 600 °C pour un temps de maintien de 1-30 h.

10. Procédé servant à fabriquer un matériau pour palier lisse selon l'une quelconque des revendications 7 à 9, comprenant les étapes de procédé :
de transfert des éléments d'alliage, des particules dures et/ou des fibres de l'alliage d'aluminium dans un bain de fusion,
de coulée continue de la matière fondue en une barre avec une section transversale sensiblement rectangulaire,
de traitement thermique de la barre,
de laminage de la barre,
de traitement thermique de la barre laminée, et
de placage-laminage de l'alliage d'aluminium sur une partie arrière de substrat en acier.
